# EUROPÄISCHE PATENTSCHRIFT

(11) **EP 0 598 256 B1**
(45) Veröffentlichungstag und Bekanntmachung des Hinweises auf die Patenterteilung: **27.12.1996**
(21) Anmeldenummer: 93117430.4
(22) Anmeldetag: 27.10.1993
(51) Int. Cl.: H01G 4/38, H01G 4/228

(54) **Elektrischer Kondensator mit kleiner Eigeninduktivität für die Energie-Elektronik**
Electrical capacitor with low inductance for energy-electronics
Condensateur électrique à faible inductance pour l'électronique d'énergie

(30) Priorität: 16.11.1992 DE 4238643
(43) Veröffentlichungstag der Anmeldung: 25.05.1994
(73) Patentinhaber: SIEMENS MATSUSHITA COMPONENTS GmbH & CO KG, 81617 München (DE)
(72) Erfinder: Utner, Ferdinand, D-93049 Regensburg (DE); Vetter, Harald, Dipl.-Ing. (FH), D-89520 Heidenheim (DE)
(74) Vertreter: Fuchs, Franz-Josef, Dr.-Ing.

(56) Entgegenhaltungen:
- EP-A- 0 182 181
- EP-A- 0 465 290
- FR-A- 1 581 052
- US-A- 3 832 607
- US-A- 5 057 967

## Beschreibung

Die Erfindung betrifft einen elektrischen Kondensator für die Energie-Elektronik, insbesondere mit kleiner Eigeninduktivität, der aus parallel verschalteten Kondensatorwickeln aus mit dünnen Metallschichten versehenen Dielektrikumsfolien besteht, bei dem die jeweils einer Elektrode zugeordneten Metallschichten zu einer Wickelstirnseite des Kondensatorwickels herausgeführt und dort mit Schoopschichten kontaktiert sind, bei dem die Stirnseiten der Wickel in je einer Ebene angeordnet sind, der als Elektrodenzuleitungen symmetrisch angeordnete mit Anschlußbolzen versehene Bandleitungen aufweist und der in ein Rechteck-Gehäuse eingebaut ist.

Ein derartiger Kondensator ist aus der US-A-5 057 967 bekannt. Über die Induktivität ist dort keine Aussage gemacht. Allerdings läßt die in der Zeichnung offenbarte Ausführungsform darauf schließen, daß der bekannte Kondensator wegen der beabstandet zum Wickelpaket umgebogenen Bandleitungen nicht niederinduktiv ausgelegt ist.

In modernen Traktionsumrichtern werden GTO-Thyristoren mit immer höheren Leistungen und Taktfrequenzen eingesetzt. In diesem Zusammenhang wird eine deutliche Reduzierung der Induktivität z. B. des Zwischenkreises erforderlich. Der oben angeführte ältere Vorschlag betrifft zwar auch Kondensatoren mit reduzierter Eigeninduktivität, jedoch besteht dort der Kondensatoraufbau aus einzelnen Kondensatorrundwickeln, die mit ihren Stirnseiten zueinander und übereinander geschichtet in einem runden metallischen Kondensatorgehäuse angeordnet sind. Durch diese Grundkonfiguration ergibt sich einerseits durch die Hohlräume des Kernrohrs bedingt eine niedrigere Volumenkapazität und andererseits ein erhöhter Platzbedarf bei Verschaltung mehrerer Kondensatoren in Kondensatorbatterien.

Aufgabe der vorliegenden Erfindung ist es deshalb, den eingangs genannten Kondensator derart auszugestalten, daß sich bei einem niederinduktiv ausgelegtem Leistungskondensator ein geringerer Platzbedarf erreichen läßt und damit Kondensatorbatterien, insbesondere für Traktionsanwendungen, mit niederer Induktivität realisieren lassen.

Diese Aufgabe wird erfindungsgemäß durch einen Kondensator gelöst, der die im Patentanspruch 1 beziehungsweise 2 angeführten Merkmale aufweist.

Eine bevorzugte Ausführungsform besteht darin, daß die Wickel als Flachwickel ausgebildet sind, und daß die Metallisierungen aus regenerierfähig dünnen Metallschichten bestehen.

Die Bandleitungen können dabei aus einem Blech geschnitten oder aus mehreren Einzelteilen zusammengesetzt sein.

Die auf das Wickelstapelende umgebogenen Bandleitungen können auch als doppelseitig kaschierte Leiterplatten ausgebildet sein. Eine niedrige Einbauhöhe unter Einhaltung der erforderlichen Kriechstromstrecke wird dadurch erreicht, daß der beispielsweise als Stapelflachwickel ausgebildete Kondensatoreinbau entweder gegen den Gehäusedeckel durch ein Kunststoffteil oder durch ein an der Innenwand des Gehäuses angebrachten Winkel o.ä. fixiert ist.

Zur weiteren Verbesserung der Isolation kann um den Stapel der Wickel zumindest eine Schrumpffolienbandage angeordnet werden, wobei vorteilhafterweise an der Ober- und ggf. der Unterseite des Stapels der Wickel vor Einbringen der Schrumpffolie zumindest eine Isolierplatte angeordnet werden kann, die ggf. seitliche Führungen für die Schrumpffolie besitzt.

Bei Verwendung mehrerer Isolierplatten kann zwischen zwei Isolierplatten ein Federelement vorzugsweise eine Blattfeder, angeordnet werden.

Der Gegenstand der Erfindung wird anhand der folgenden Ausführungsbeispiele naher erläutert.

In der dazugehörenden Zeichnung zeigen
FIG 1 ein Rechteckgehause mit eingebauten Stapelflachwickel,
FIG 2 eine um 90° gedrehte Ansicht des Gehäuses nach FIG 1,
FIG 3 eine Teilansicht einer Wickelfixierung
FIG 4 einen vergrößerten Ausschnitt aus FIG 1,
FIG 5 eine Explosionsdarstellung des Wickelstapels mit Kontaktierungselementen und
FIG 6 ein Diagramm in dem die Abhangigkeit der Induktivität von der Lange der Anschlußbolzen angeführt ist.

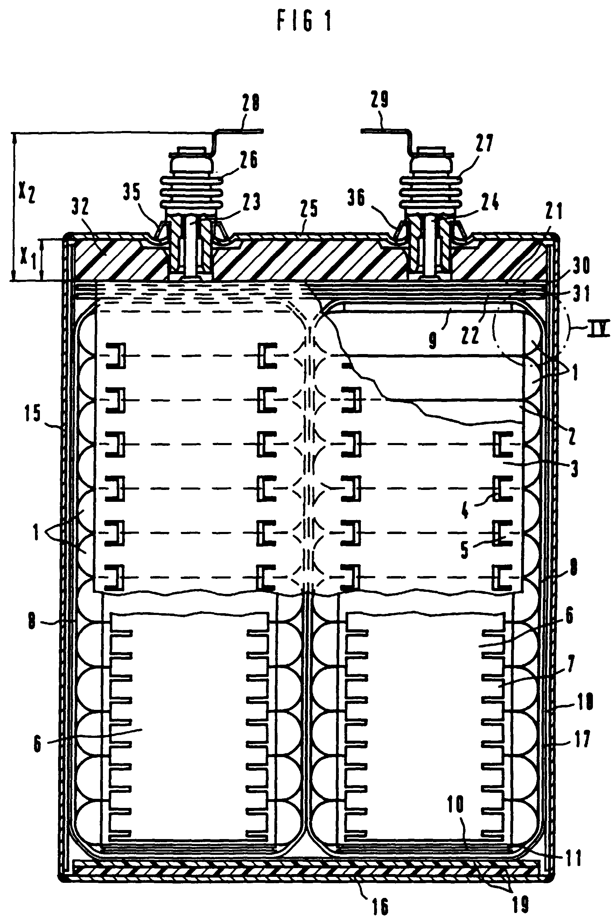

In der FIG 1 ist ein elektrischer Kondensator für die Energieelektronik dargestellt, der aus aufeinander gestapelten Flachwickelkondensatoren 1 besteht. Die Flachwickelkondensatoren 1 bestehen aus Dielektrikumsfolien, z. B. aus Polypropylen, und weisen als Elektroden regenerierfähig dünne Metallschichten auf. Derartige Kondensatoren werden auch als selbstheilende Kondensatoren bezeichnet, da Schwachstellen des Dielektrikums, die zu Durchschlägen führen, zu einer Verdampfung des Metallbelags an den Durchschlagsstellen führen und damit diese Durchschlagsstellen spannungslos gemacht werden.

Die Elektroden sind jeweils zu einer Wickelstirnseite herausgeführt und dort mit Kontaktschichten 2 versehen, die nach dem Schoop'schen Flammspritzverfahren hergestellt sind. Diese großflächige Metallbeschoopung der Wickelstirnseiten gewährleistet einerseits eine kontaktsichere Verbindung zwischen den Elektroden und den Anschlußelementen und trägt andererseits zur Erniedrigung der Induktivität bei.

Das Wickelpaket wird an den Stirnseiten durch Bandleitungen kontaktiert, die als Anschlußblech 3 ausgebildet sind, das Durchbrüche 4 und federnde Kontaktlappen 5 besitzt, die mit den Kontaktschichten 2 der Flachwickel 1 verbunden sind. Das Anschlußblech 3 wird dabei vorzugsweise in einer Breite ausgeführt, daß sämtliche nebeneinander angeordneten Wickel gleichzeitig kontaktiert werden können.

Eine andere Möglichkeit für eine Bandleitung besteht darin, jedem Kondensatorstapel ein gesondertes Anschlußblech 6 zuzuordnen, daß federnde Fiederungen 7 im Lötbereich der Kontaktschichten 2 aufweist.

Die im wesentlichen formstarren Anschlußbleche 3 bzw. 6 bestehen vorzugsweise aus Kupfer und bewirken eine Parallelschaltung des Wickelstapels.

Die Pakete der Flachwickel 1 sind jeweils mit einer Schrumpffolie 8 verfestigt, wobei auf der Oberseite Isolationselemente 9 und auf der Unterseite Isolationselemente 10 angebracht sein können, die ggf. seitliche Führungen 11 für die Schrumpffolie 8 besitzen.

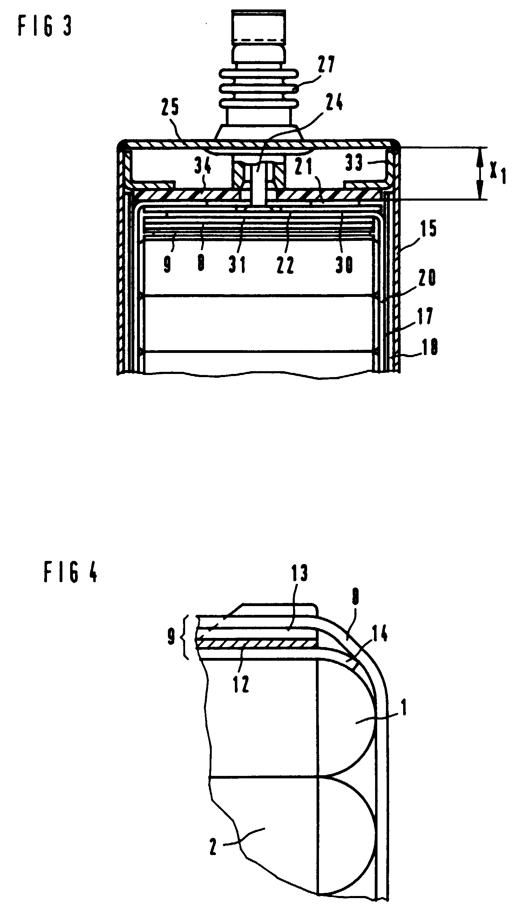

In der FIG 4 ist dargestellt, daß das obere Isolationselement 9 vorzugsweise als Federelement 12 (z. B. eine Blattfeder) ausgebildet ist, das zwischen zwei Isolierungen 13, 14 angeordnet ist.

Die Wickelstapel sind in ein Rechteckmetallgehäuse 15 eingebaut, das vorzugsweise aus Edelstahl oder Aluminium besteht und einen dicht angeschweißten oder angelöteten Boden 16 besitzt. Zur Isolation der Wickelpakete gegenüber dem metallischen Gehäuse 15 sind die Flachwickel in eine Isolierung 17 eingebaut, die z. B. aus einem geformten Becher bzw. Halbschalen besteht. Die Isolierung 17 kann aber auch aus einem gewickelten Paket aus Kunststoffolien bestehen, die mehrfach allseitig die Flachwickel umgeben.

Weiterhin können zwischen Mantel des Gehäuses 15 und der Isolierung 17 zusätzliche Isolationsplatten 18 für eine mehrlagige Isolation und zum Auffüllen der eventuell vorhandenen Leerabstände verwendet werden. In gleicher Weise können zwischen Gehäuseboden 16 und Isolierung 17 Isolationsplatten 19 zum Auffüllen bzw. Toleranzausgleich in der Kondensatorhöhe eingesetzt werden.

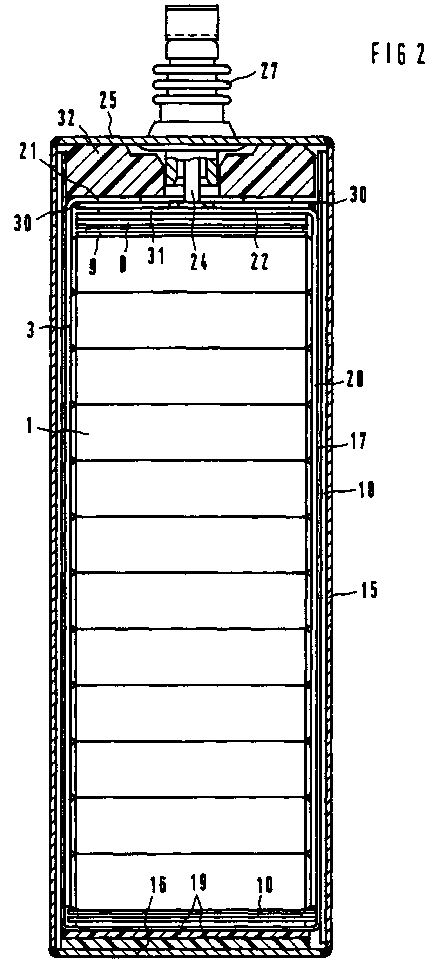

Die FIG 2 zeigt den in FIG 1 dargestellten Kondensator von rechts, d. h. um 90° gedreht. In dieser FIG ist zu erkennen, daß die Anschlußbleche 3 bzw. 20 nach oben auf das Wickelpaket umgebogen sind und dort die abgewinkelten Anschlußstücke 21, 22 bilden. Diese Anschlußstücke 21, 22 sind entweder direkt an die Anschlußbleche 3 bzw. 20 angeformt, können aber auch durch ausreichend dimensionierte, beidseitig kaschierte Leiterplatten gebildet werden, die an die Anschlußbleche 3 bzw. 20 angelötet sind.

An den abgewinkelten Anschlußstücken 21, 22 sind Anschlußbolzen 23, 24 durch Schweißung oder Lötung befestigt, wobei der Verbindungsbereich ggf. als federnder Lappen ausgebildet sein kann. Die Anschlußbolzen 23, 24 sind gegenüber dem Gehäusedeckel 25 durch Wellenkeramiken 26, 27 isoliert, die durch elastische Adapter 28, 29 mit dem Gehäusedeckel 25 dicht verlötet sind. Der Gehäusedeckel 25 ist seinerseits mit dem Mantel des Rechteckgehäuses 15 ebenfalls dicht verlötet oder verschweißt.

Die Anschlußbolzen 23, 24 sind innerhalb der Wellenkeramiken 26, 27 nach außen geführt und mit Anschlüssen 28, 29 versehen, die beispielsweise als Schraubanschlüsse oder Weichkupferlasche ausgebildet sein können.

Zur Isolierung zwischen den abgewinkelten Anschlußstücken 21, 22, dient die Isolationsplatte 30. Eine weitere Isolationsplatte 31 ist zwischen Schrumpffolie 8 und abgewinkeltem Anschlußstück 22 angeordnet.

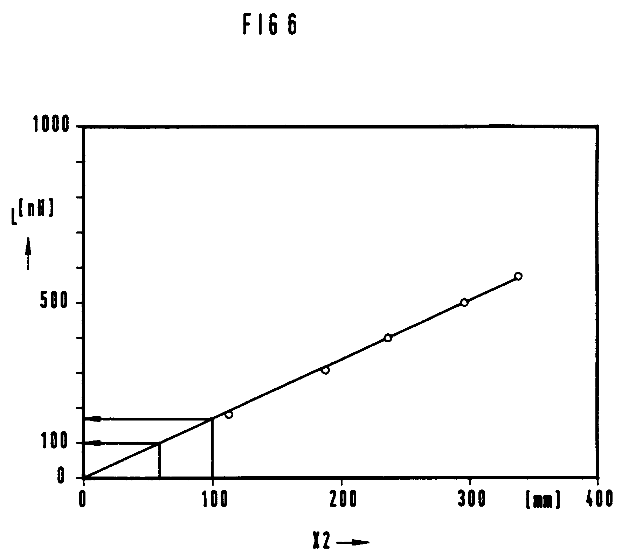

In der FIG 6 ist die Induktivität eines Kondensators nach den Ausführungsbeispielen in Abhangigkeit von der Länge x₂ dargestellt. Wie dieser FIG zunächst unmittelbar zu entnehmen ist, besitzt der Wickelstapel selbst ( durch die erfindungsgemäße Anordnung + Verschaltung) praktisch keine nennenswerte Induktivität (FIG 6 zeigt an der Stelle x₂ = 0 eine Induktivität L ≈ 0)

Die Konstruktionslänge x₂ setzt sich dabei aus der Konstruktionslänge x₁ (Abstand zwischen verschaltetem Wickelstapel und Gehäusedeckel 25) sowie der Länge der außeren Kondensatoranschlüsse x₂ - x₁ zusammen.

Um das Maß x₁ möglichst klein zu halten, wird der Wickelstapel über ein Kunststoffteil 32 gegen den Gehausedeckel 25 abgestützt. Als Alternative kann auch eine Ausführungsform verwendet werden, die in der FIG 3 dargestellt ist. Dort ist das Wickelpaket durch einen Winkel 33 mechanisch fixiert, der an der Innenwand des Gehäuses 15 befestigt, z. B. angeschweißt ist. Zwischen Wickelpaket und Metallwinkel 33 ist eine Druckplatte 34 aus Kunststoff angeordnet.

Die Größe der Abmessungen x₁ bzw.x₂ wird durch die notwendigen Kriech- bzw. Luftstrecken und die konstruktive Gestaltung der Wellenkeramiken 26, 27 bzw. der Einbauelemente vorgegeben.

Aus der FIG 6 ist ersichtlich, daß bei einer Länge x₂ von ca. 100 mm ein Induktivitätswert von ca. 180 nH für den Kondensator resultiert.

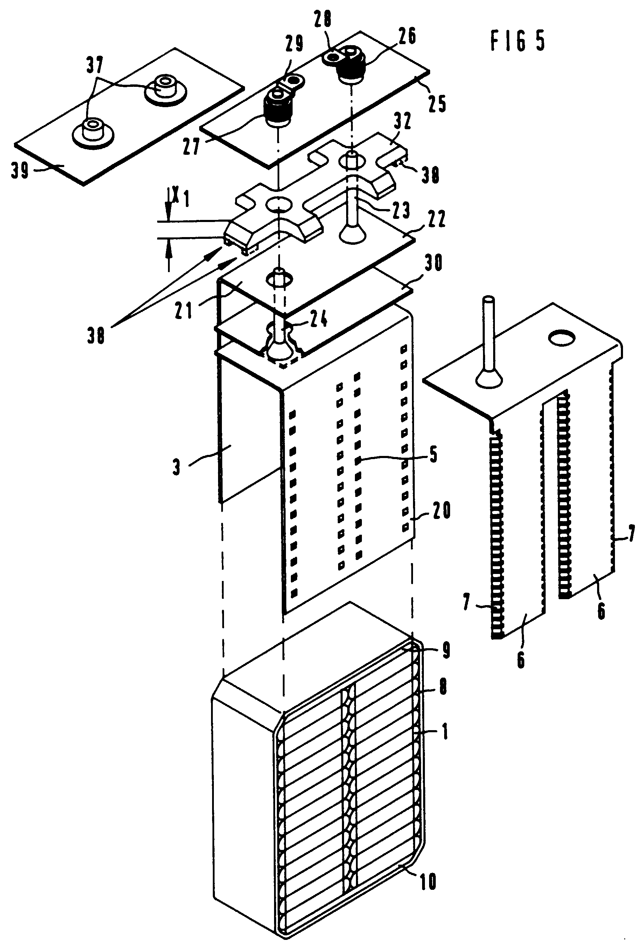

In der FIG 5 ist eine Explosionsdarstellung des Wickelpakets mit Kontaktierungselementen wiedergegeben. Dort ist ersichtlich, daß am Kunststoffteil 32 ggf. seitliche Abstützungsrippen 38 angeordnet sein können, die eine zusätzliche Fixierung des Wickelpakets bewirken.

Ferner ist in FIG 5 eine weitere Ausführungsform eines Gehäusedeckels 39 angeführt, der als Durchführungselement flache Keramiken 37, ggf. mit minimal kurzem zylindrischen Teil, zur Minimierung der Anschlußbolzenhöhe aufweist. Hiermit läßt sich ein Maß von x₂ von ca. 60 mm erreichen, was nach FIG 6 einer Induktivität L von ca. 100 nH entspricht.

Es ergibt sich somit, daß ein Kondensator nach der Erfindung in Abhängigkeit von der konstruktiven Ausführung im Anschlußbereich sehr niedrige Induktivitätswerte besitzt, die praktisch unabhängig von der zugehörigen Wickelstapelgeometrie bzw. Größe sind. Durch die Anordnung im Rechteckgehäuse ergibt sich weiterhin, daß der Kondensator in Batterien bei höchstmöglicher Volumenkapazität platzgünstig eingebaut werden kann.

### Bezugszeichenliste

- 1: Flachwickel
- 2: Kontaktschicht
- 3: Anschlußblech
- 4: Durchbrücke
- 5: federnde Kontaktlappen
- 6: Anschlußbleche
- 7: federnde Fiederungen
- 8: Schrumpffolie
- 9: Isolationselement
- 10: Isolationselement
- 11: seitliche Führungen
- 12: Federelement
- 13: Isolierung
- 14: Isolierung
- 15: Rechteck-Metallgehäuse
- 16: Gehäuseboden
- 17: Isolierung
- 18: Isolationsplatte
- 19: Isolationsplatte
- 20: Anschlußblech
- 21: abgewinkeltes Anschlußstück
- 22: abgewinkeltes Anschlußstück
- 23: Anschlußbolzen
- 24: Anschlußbolzen
- 25: Gehäusedeckel
- 26: Wellenkeramik
- 27: Wellenkeramik
- 28: Kondensatoranschluß
- 29: Kondensatoranschluß
- 30: Isolationsplatte
- 31: Isolationsplatte
- 32: Kunststoffteil
- 33: Winkel
- 34: Druckplatte
- 35: Adapter
- 36: Adapter
- 37: flache Keramik
- 38: Abstützungsrippen
- 39: Gehäusedeckel

## Patentansprüche

1. Elektrischer Kondensator für die Energie-Elektronik, insbesondere mit kleiner Eigeninduktivität, der aus parallel verschalteten Kondensatorwickeln (1) aus mit dünnen Metallschichten versehenen Dielektrikumsfolien besteht, bei dem die jeweils einer Elektrode zugeordneten Metallschichten zu einer Wickelstirnseite des Kondensatorwickels (1) herausgeführt und dort mit Schoopschichten (2) kontaktiert sind, bei dem die Stirnseiten der Wickel (1) in je einer Ebene angeordnet sind, der als Elektrodenzuleitungen symmetrisch angeordnete mit Anschlußbolzen (23, 24) versehene Bandleitungen (3, 6, 20) aufweist und der in ein Rechteck-Gehäuse (15) eingebaut ist,
**dadurch gekennzeichnet**,
daß die Bandleitungen (3, 6, 20) im wesentlichen formstarr ausgebildete, großflächige Anschlußbleche sind, daß die Bandleitungen (3, 6, 20) auf die Oberseite des Wickelstapels umgebogen sind, und daß in den Anschlußblechen (3, 20) Durchbrüche (4) zur Wickelkontaktierung angeordnet sind.

2. Elektrischer Kondensator für die Energie-Elektronik, insbesondere mit kleiner Eigeninduktivität, der aus parallel verschalteten Kondensatorwickeln (1) aus mit dünnen Metallschichten versehenen Dielektrikumsfolien besteht, bei dem die jeweils einer Elektrode zugeordneten Metallschichten zu einer Wickelstirnseite des Kondensatorwickels (1) herausgeführt und dort mit Schoopschichten (2) kontaktiert sind, bei dem die Stirnseiten der Wickel (1) in je einer Ebene angeordnet sind, der als Elektrodenzuleitungen symmetrisch angeordnete mit Anschlußbolzen (23, 24) versehene Bandleitungen (3, 6, 20) aufweist und der in ein Rechteck-Gehäuse (15) eingebaut ist,
**dadurch gekennzeichnet**,
daß die Bandleitungen (3, 6, 20) im wesentlichen formstarr ausgebildete, großflächige Anschlußbleche sind, daß die Bandleitungen (3, 6, 20) auf die Oberseite des Wickelstapels umgebogen sind, und daß die Anschlußbleche (6) zur Wickelkontaktierung federnde Fiederungen (7) aufweisen.

3. Elektrischer Kondensator nach Anspruch 1 oder 2
**dadurch gekennzeichnet**,
daß die Kondensatorwickel als Flachwickel (1) ausgebildet sind, und daß die Metallisierungen aus regenerierfähig dünnen Metallschichten bestehen.

4. Elektrischer Kondensator nach einem der Ansprüche 1 bis 3
**dadurch gekennzeichnet**,
daß die Bandleitungen (3, 6, 20) aus großflächigen Anschlußblechen bestehen.

5. Elektrischer Kondensator nach einem der Ansprüche 1 bis 4,
**dadurch gekennzeichnet**,
daß die abgewinkelten Anschlußstücke (21, 22) der Bandleitungen (3, 20) als doppelseitig kaschierte Leiterplatte ausgebildet ist.

6. Elektrischer Kondensator nach einem der Ansprüche 1 bis 5,
**dadurch gekennzeichnet**,
daß der Stapel der Wickel (1) gegen den Gehäusedeckel (25) durch ein Kunststoffteil (32) fixiert und im Gehäuse zentriert ist, und daß der Längenausgleich durch Platten (19) mit abgestimmter Dicke erfolgt.

7. Elektrischer Kondensator nach einem der Ansprüche 1 bis 5,
**dadurch gekennzeichnet**,
daß der Stapel der Wickel (1) durch einen an der Innenwand des Gehäuses (15) angebrachten Winkel (33) fixiert ist.

8. Elektrischer Kondensator nach einem der Ansprüche 1 bis 7,
**dadurch gekennzeichnet**,
daß um den Stapel der Flachwickel (1) zumindest eine Schrumpffolie (8) angeordnet ist.

9. Elektrischer Kondensator nach Anspruch 8,
**dadurch gekennzeichnet**,
daß an der Ober- und ggf. der Unterseite des Stapels der Wickel (1) unterhalb der Schrumpffolie (8) zumindest eine Isolierplatte (9, 10) angeordnet ist.

10. Elektrischer Kondensator nach Anspruch 9,
**dadurch gekennzeichnet**,
daß die Isolierplatte (10) seitliche Führungen (11) für die Schrumpffolie (8) besitzt.

11. Elektrischer Kondensator nach Anspruch 9 oder 10,
**dadurch gekennzeichnet**,
daß zwischen zwei Isolierplatten (13, 14) ein Federelement (12), vorzugsweise eine Blattfeder, angeordnet ist.

## Claims

1. Electric capacitor for power electronics, in particular having a low self-inductance, which comprises parallel-connected capacitor elements (1) made from dielectric foils provided with thin metal layers, in which capacitor the metal layers assigned in each case to an electrode are led out to an element end face of the capacitor element (1) and contacted there to Schoop layers (2), in which capacitor the end faces of the elements (1) are arranged in one plane each, which capacitor has as electrode supply leads symmetrically arranged striplines (3, 6, 20) provided with terminal studs (23, 24), and which capacitor is installed in a rectangular housing (15), characterized in that the striplines (3, 6, 20) are essentially rigidly constructed, large-area terminal plates, in that the striplines (3, 6, 20) are bent over onto the top side of the element stack, and in that cutouts (4) are arranged in the terminal plates (3, 20) for the purpose of contacting the elements.

2. Electric capacitor for power electronics, in particular having a low self-inductance, which comprises parallel-connected capacitor elements (1) made from dielectric foils provided with thin metal layers, in which capacitor the metal layers assigned in each case to an electrode are led out to an element end face of the capacitor element (1) and contacted there to Schoop layers (2), in which capacitor the end faces of the elements (1) are arranged in one plane each, which capacitor has as electrode supply leads symmetrically arranged striplines (3, 6, 20) provided with terminal studs (23, 24), and which capacitor is installed in a rectangular housing (15), characterized in that the striplines (3, 6, 20) are essentially rigidly constructed, large-area terminal plates, in that the striplines (3, 6, 20) are bent over onto the top side of the element stack, and in that the terminal plates (6) have resilient feathers (7) for the purpose of contacting the elements.

3. Electric capacitor according to Claim 1 or 2, characterized in that the capacitor elements are constructed as flat elements (1), and in that the metallic coatings comprise regeneratable thin metal layers.

4. Electric capacitor according to one of Claims 1 to 3, characterized in that the striplines (3, 6, 20) comprise large-area terminal plates.

5. Electric capacitor according to one of Claims 1 to 4, characterized in that the angular terminal pieces (21, 22) of the striplines (3, 20) are designed as a printed circuit board coated on both sides.

6. Electric capacitor according to one of Claims 1 to 5, characterized in that the stack of the elements (1) is fixed against the housing cover (25) by a plastic part (32) and is centred in the housing, and in that the length compensation is performed by plates (19) of matching thickness.

7. Electric capacitor according to one of Claims 1 to 5, characterized in that the stack of the elements (1) is fixed by an angle (33) fitted to the inner wall of the housing (15).

8. Electric capacitor according to one of Claims 1 to 7, characterized in that at least one shrink-fit foil (8) is arranged around the stack of the flat elements (1).

9. Electric capacitor according to Claim 8, characterized in that at least one insulating plate (9, 10) is arranged on the top side and, if appropriate, on the bottom side of the stack of the elements (1) below the shrink-fit foil (8).

10. Electric capacitor according to Claim 9, characterized in that the insulating plate (10) has lateral guides (11) for the shrink-fit foil (8).

11. Electric capacitor according to Claim 9 or 10, characterized in that a spring element (12), preferably a leaf spring, is arranged between two insulating plates (13, 14).

## Revendications

1. Condensateur électrique destiné à l'électronique de puissance, notamment à faible inductance propre, qui est constitué de bobinages (1) de condensateur branchés en parallèle en feuilles de diélectrique revêtues de minces couches métalliques, dans lequel les couches métalliques associées à une électrode sortent en face frontale du bobinage (1) du condensateur, où l'établissement du contact est effectué avec des couches de schoopage (2), dans lequel les faces frontales des bobinages (1) sont disposées chacune dans un plan, qui comporte, en tant que lignes d'alimentation d'électrodes, des conducteurs plats (3, 6, 20) disposés symétriquement et munis de boulons de raccordement (23, 24), et qui est monté dans un boîtier rectangulaire (15),
caractérisé par le fait que
les conducteurs plats (3, 6, 20) sont des tôles de raccordement de grande surface de forme sensiblement rigide, que les conducteurs plats (3, 6, 20) sont coudés sur la partie supérieure de l'empilage de bobinages, et que des traversées (4) sont prévues dans les tôles de raccordement (3, 20) pour l'établissement du contact des bobinages.

2. Condensateur électrique destiné à l'électronique de puissance, notamment à faible inductance propre, qui est constitué de bobinages (1) de condensateur branchés en parallèle en feuilles de diélectrique revêtues de minces couches métalliques, dans lequel les couches métalliques associées à une électrode sortent en face frontale du bobinage (1) du condensateur où l'établissement du contact est effectué avec des couches de schoopage (2), dans lequel les faces frontales des bobinages (1) sont disposées dans un plan, qui comporte, en tant que lignes d'alimentation d'électrodes, des conducteurs plats (3, 6, 20) disposés symétriquement et munis de boulons de raccordement (23, 24), et qui est monté dans un boîtier rectangulaire (15),
caractérisé par le fait que
les conducteurs plats (3, 6, 20) sont des tôles de raccordement de grande surface de forme sensiblement rigide, que les conducteurs plats (3, 6, 20) sont coudés sur la partie supérieure de l'empilage de bobinages, et que les tôles de raccordement (6) comportent des languettes élastiques (7) pour l'établissement du contact des bobinages.

3. Condensateur électrique selon la revendication 1 ou 2,
caractérisé par le fait que
les bobinages de condensateur sont réalisées sous la forme de bobinages plats (1), et que les métallisations sont constituées de minces couches métalliques régénérables.

4. Condensateur électrique selon l'une quelconque des revendications 1 à 3,
caractérisé par le fait que
les conducteurs plats (3, 6, 20) sont constitués de tôles de raccordement de grande surface.

5. Condensateur électrique selon l'une quelconque des revendications 1 à 4,
caractérisé par le fait que
les éléments de raccordement (21, 22) coudés des conducteurs plats (3, 20) sont réalisés sous la forme de plaques conductrices plaquées sur les deux faces.

6. Condensateur électrique selon l'une quelconque des revendications 1 à 5,
caractérisé par le fait que
l'empilage des bobinages (1) est immobilisé contre le couvercle (25) du boîtier par une pièce (32) en matière plastique et est centré dans le boîtier, et que la compensation de longueur est effectuée par des plaques (19) d'épaisseur adaptée.

7. Condensateur électrique selon l'une quelconque des revendications 1 à 5,
caractérisé par le fait que
l'empilage des bobinages (1) est immobilisé par une cornière (33) mise en place sur la paroi intérieure du boîtier (15).

8. Condensateur électrique selon l'une quelconque des revendications 1 à 7,
caractérisé par le fait que
au moins une feuille rétractable (8) est disposée autour de l'empilage des bobinages plats (1).

9. Condensateur électrique selon la revendication 8,
caractérisé par le fait que
au moins une plaque d'isolation (9, 10) est disposée au-dessous de la feuille rétractable (8) sur la face supérieure et, le cas échéant, sur la face inférieure de l'empilage des bobinages (1).

10. Condensateur électrique selon la revendication 9,
caractérisé par le fait que
la plaque d'isolation (10) comporte des guidages latéraux (11) pour la feuille rétractable (8).

11. Condensateur électrique selon la revendication 9 ou 10,
caractérisé par le fait que
un élément à ressort (12), de préférence un ressort à lame, est disposé entre deux plaques d'isolation (13, 14).
